# EUROPEAN PATENT SPECIFICATION

(11) **EP 3 306 212 B1**
(45) Date of publication and mention of the grant of the patent: **30.12.2020**
(21) Application number: 15894292.0
(22) Date of filing: 30.10.2015
(51) Int. Cl.: F24F 7/08, F24F 13/22, F24F 12/00, F24F 13/28, F24F 13/20, F24F 13/30

(54) **HEAT EXCHANGE-TYPE VENTILATION DEVICE**
WÄRMETAUSCHARTIGE BELÜFTUNGSVORRICHTUNG
DISPOSITIF DE VENTILATION DE TYPE À ÉCHANGE DE CHALEUR

(30) Priority: 29.05.2015 WO PCT/JP2015/065677; 29.05.2015 WO PCT/JP2015/065678; 29.05.2015 WO PCT/JP2015/065679
(43) Date of publication of application: 11.04.2018
(73) Proprietor: Mitsubishi Electric Corporation, Chiyoda-ku Tokyo 100-8310 (JP)
(72) Inventor: AOKI, Hiroki, Tokyo 100-8310 (JP); MIYAZAKI, Yuki, Tokyo 100-8310 (JP); IWATA, Koji, Tokyo 100-8310 (JP); FUJII, Yoshinori, Tokyo 102-0073 (JP); KATO, Shinya, Tokyo 102-0073 (JP)
(74) Representative: Mewburn Ellis LLP
(86) International application number: PCT/JP2015/080856
(87) International publication number: WO 2016/194260

(56) References cited:
- JP-A- H05 223 305
- JP-A- H07 293 960
- JP-A- H08 219 136
- JP-A- H09 203 547
- JP-A- 2004 263 893
- JP-A- 2004 263 893
- JP-A- 2005 106 427
- JP-U- S6 189 791
- JP-U- S53 159 159
- KR-B1- 100 824 368

## Description

### Field

The present invention relates to a heat-exchange type ventilation apparatus that provides ventilation while allowing heat exchange between a supply airflow and a discharge airflow.

### Background

It is conventional to use a heat-exchange type ventilation apparatus that includes a main body having a supply air path and a discharge air path formed therein and a heat exchanger placed inside the main body and that provides ventilation while allowing heat exchange between a supply airflow passing through the supply air path and a discharge airflow passing through the discharge air path.

The heat exchanger is provided with a supply air inlet surface in which a supply airflow flows and a discharge air inlet surface in which a discharge airflow flows. The heat-exchange type ventilation apparatus includes a filter that covers the supply air inlet surface or the discharge air inlet surface and catches insects and dust included in the airflow. A heat-exchange type ventilation apparatus disclosed in Patent Literature 1 includes a positioning member for positioning a heat exchanger in a main body.

### Citation List

### Patent Literature

Patent Literature 1: Japanese Patent Application Laid-open No. 2001-263752
Patent Literature 2: KR 100824368 B1 discloses fixer for heat exchange element of ventilation unit.
Patent Literature 3: JP H07293960 A discloses heat exchanging element and heat exchanging ventilator using the same.

### Summary

### Technical Problem

As described above, the filter is provided inside the main body in addition to the heat exchanger. When a positioning member for positioning the filter is further provided inside the main body, a problem arises in that the number of components increases.

The present invention has been achieved in view of the above, and an object of the present invention is to provide a heat-exchange type ventilation apparatus that enables a heat exchanger and a filter to be positioned inside a main body while an increase in the number of components is suppressed.

### Solution to Problem

To solve the above problems and achieve the object, the heat-exchange type ventilation apparatus according to an aspect of the present invention is as set forth in claim 1.

### Advantageous Effects of Invention

A heat-exchange type ventilation apparatus according to the present invention produces an effect of enabling a supply air filter and a discharge air filter to be positioned inside a main body while an increase in the number of components is suppressed.

### Brief Description of Drawings

FIG. 1 is an exploded perspective view of a heat-exchange type ventilation apparatus according to a first embodiment of the present invention as viewed from the top surface side.
FIG. 2 is an exploded perspective view of the heat-exchange type ventilation apparatus according to the first embodiment as viewed from the bottom surface side.
FIG. 3 is a plan view of the heat-exchange type ventilation apparatus according to the first embodiment.
FIG. 4 is a cross-sectional view of the heat-exchange type ventilation apparatus according to the first embodiment as viewed from the side thereof.
FIG. 5 is a perspective view of a heat exchanger according to the first embodiment.
FIG. 6 is an exploded perspective view of the heat exchanger according to the first embodiment.
FIG. 7 is a partially enlarged cross-sectional view of a corner portion of the heat exchanger according to the first embodiment.
FIG. 8 is a partially enlarged cross-sectional view of a corner portion of the heat exchanger accommodated in a housing in the heat-exchange type ventilation apparatus according to the first embodiment.
FIG. 9 is a perspective view of a supply air filter frame included in a supply air filter and a discharge air filter frame included in a discharge air filter according to the first embodiment.
FIG. 10 is a partially enlarged perspective view of the supply air filter frame according to the first embodiment.
FIG. 11 is an exploded perspective view of an air supplying fan and an air discharging fan in the heat-exchange type ventilation apparatus according to the first embodiment.
FIG. 12 is a partially enlarged cross-sectional view of a portion D illustrated in FIG. 4.
FIG. 13 is a partially enlarged perspective view of the portion D illustrated in FIG. 4.
FIG. 14 is a partially enlarged perspective view of a portion A illustrated in FIG. 4.
FIG. 15 is a perspective view of a positioning member according to the first embodiment.
FIG. 16 is a partially enlarged cross-sectional view of the portion A illustrated in FIG. 4.
FIG. 17 is a partially enlarged cross-sectional view of a portion in which the positioning member is fixed with a screw and which corresponds to the portion A illustrated in FIG. 4.

### Description of Embodiments

A heat-exchange type ventilation apparatus according to embodiments of the present invention will now be described in detail with reference to the drawings. The present invention is not limited to the embodiments.

### First embodiment.

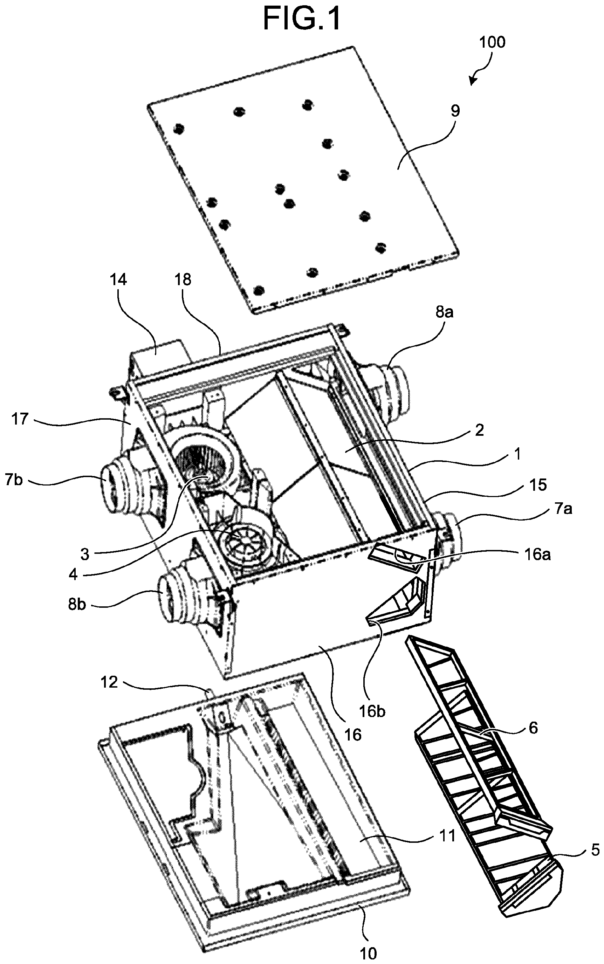

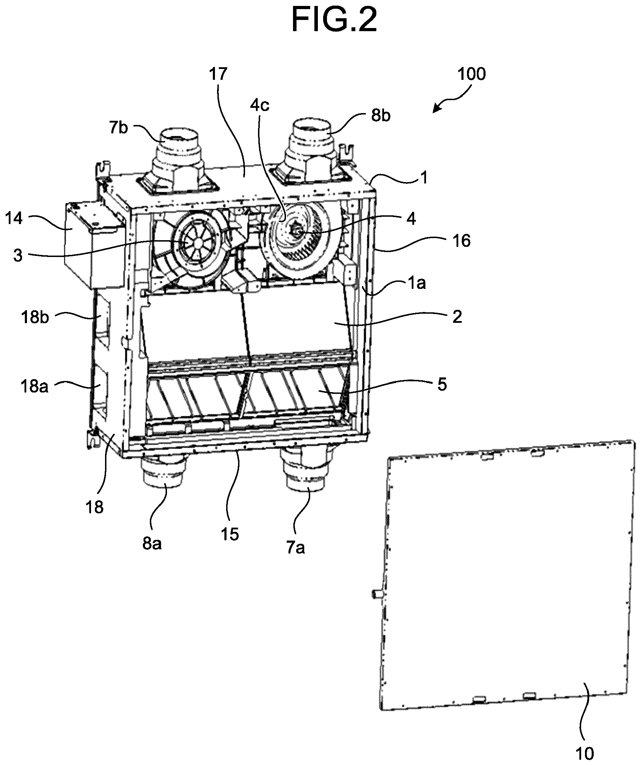

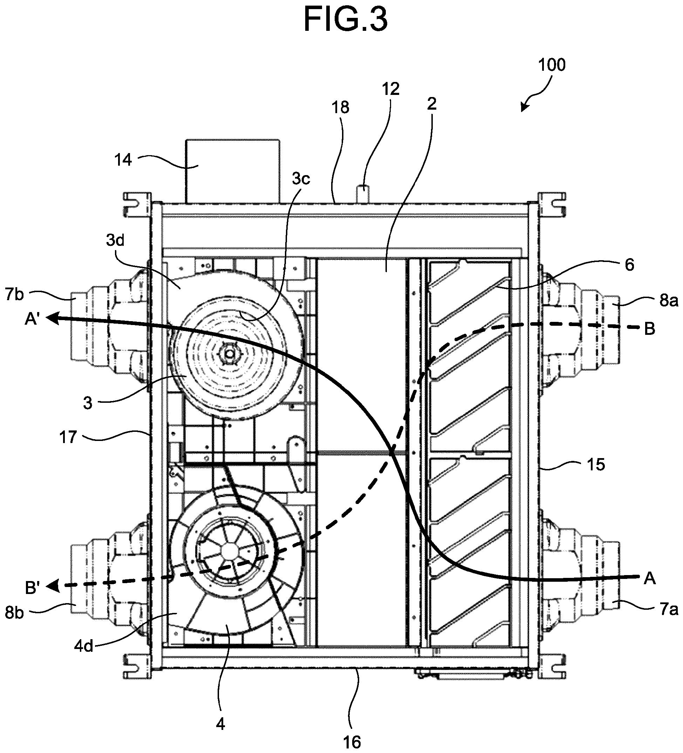

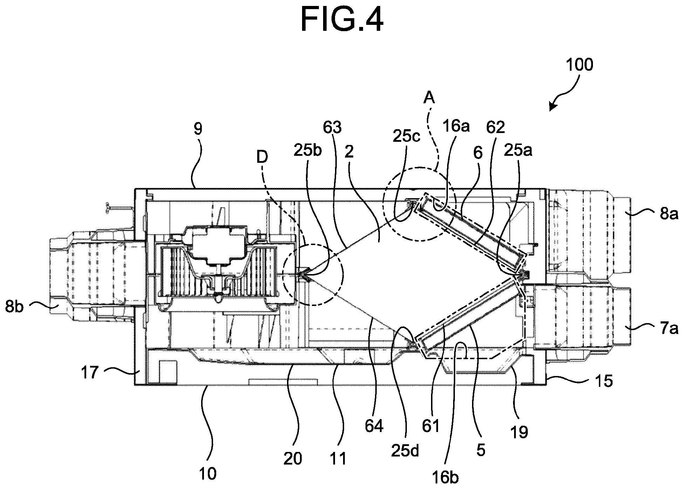

FIG. 1 is an exploded perspective view of a heat-exchange type ventilation apparatus according to a first embodiment of the present invention as viewed from the top surface side. FIG. 2 is an exploded perspective view of the heat-exchange type ventilation apparatus according to the first embodiment as viewed from the bottom surface side. FIG. 3 is a plan view of the heat-exchange type ventilation apparatus according to the first embodiment. FIG. 4 is a cross-sectional view of the heat-exchange type ventilation apparatus according to the first embodiment as viewed from the side thereof.

A heat-exchange type ventilation apparatus 100 according to the present embodiment includes a housing 1, which is a main body; a heat exchanger 2, an air supplying fan 3; an air discharging fan 4; a supply air filter 5; and a discharge air filter 6. The housing 1 includes an exterior-side inlet portion 7a; an interior-side inlet portion 8a; an interior-side outlet portion 7b; and an exterior-side outlet portion 8b formed therein. A supply air path that connects the exterior-side inlet portion 7a and the interior-side outlet portion 7b is formed in the housing 1. A discharge air path that connects the interior-side inlet portion 8a and the exterior-side outlet portion 8b is also formed in the housing 1.

The air supplying fan 3 is placed in the supply air path. The air supplying fan 3 generates a supply airflow that causes outside air (supply air) that is admitted through the exterior-side inlet portion 7a into the supply air path to flow out through the interior-side outlet portion 7b.

The air discharging fan 4 is placed in the discharge air path. The air discharging fan 4 generates a discharge airflow that causes inside air (discharge air) that is admitted through the interior-side inlet portion 8a into the discharge air path to flow out through the exterior-side outlet portion 8b.

The heat exchanger 2 is placed at the intersection portion of the supply air path and the discharge air path in the housing 1 and allows heat exchange between the supply airflow and the discharge airflow. The heat-exchange type ventilation apparatus 100 is a ventilation apparatus that provides ventilation while allowing heat exchange between the supply airflow and the discharge airflow.

The housing 1 includes six surfaces, i.e., a top plate 9, a bottom plate 10 opposite the top plate 9, and four side plates 15 to 18 closing the spaces between the top plate 9 and the bottom plate 10. The side plate 15 includes the exterior-side inlet portion 7a and the interior-side inlet portion 8a placed therein. The side plate 17, which is opposite the side plate 15, includes the interior-side outlet portion 7b and the exterior-side outlet portion 8b placed therein. In this case, the path passing from the exterior-side inlet portion 7a through the heat exchanger 2 and the air supplying fan 3 to the interior-side outlet portion 7b is the supply air path A-A', and the path passing from the interior-side inlet portion 8a through the heat exchanger 2 and the air discharging fan 4 to the exterior-side outlet portion 8b is the discharge air path B-B' (see FIG. 3). The air supplying fan 3 and the air discharging fan 4 are disposed downstream of the heat exchanger 2 in their respective paths.

A control circuit 14 is attached to the side plate 18. As illustrated in FIG. 2, the side plate 18 has an opening 18a and an opening 18b, which can be used as ports to admit air into the discharge air path B-B', in addition to the interior-side inlet portion 8a. The opening 18a is connected upstream of the heat exchanger 2 and thus the air admitted from the opening 18a is discharged through the heat exchanger 2. The opening 18b is connected downstream of the heat exchanger 2 and thus the air admitted from the opening 18b is discharged without going through the heat exchanger 2. Consequently, when a duct in communication with the room is connected to the opening 18b, inside air is discharged without going through the heat exchanger 2 and thus heat exchange is not performed. It is possible to reduce the pressure loss needed for the air to pass through the heat exchanger 2 although heat exchange is not performed between inside air and outside air. In this manner, the load on the air discharging fan 4 can be reduced and thereby the power consumption can be reduced. The side plate 16, which is opposite the side plate 18, has openings 16a and 16b (second openings), which are insertion apertures. The supply air filter 5 and the discharge air filter 6 can be inserted into the housing 1 through the openings 16a and 16b. Because maintenance can be performed on both of the supply air filter 5 and the discharge air filter 6 from one direction of the side plate 16, ease of cleaning can be improved.

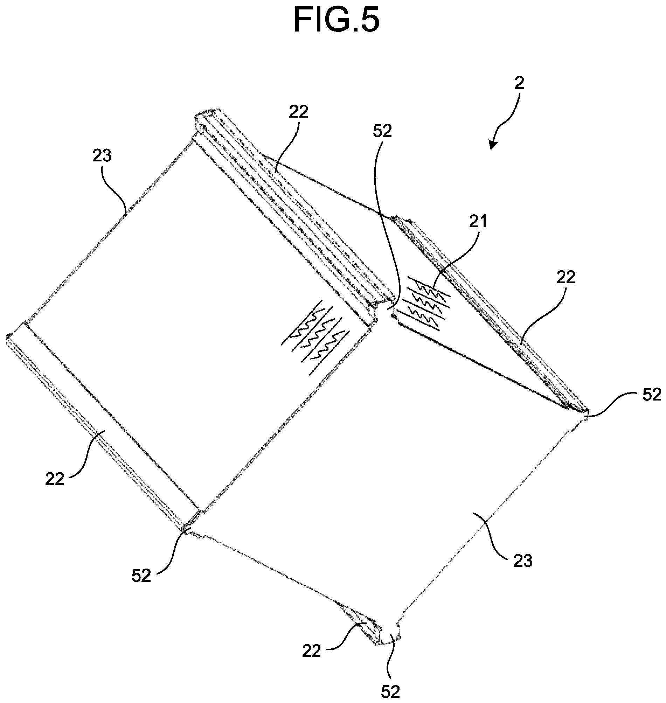

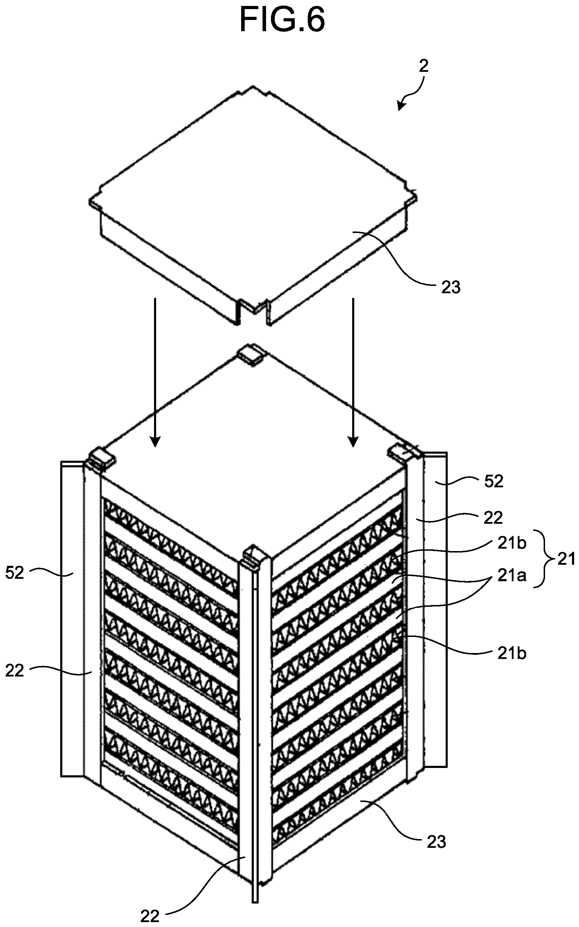

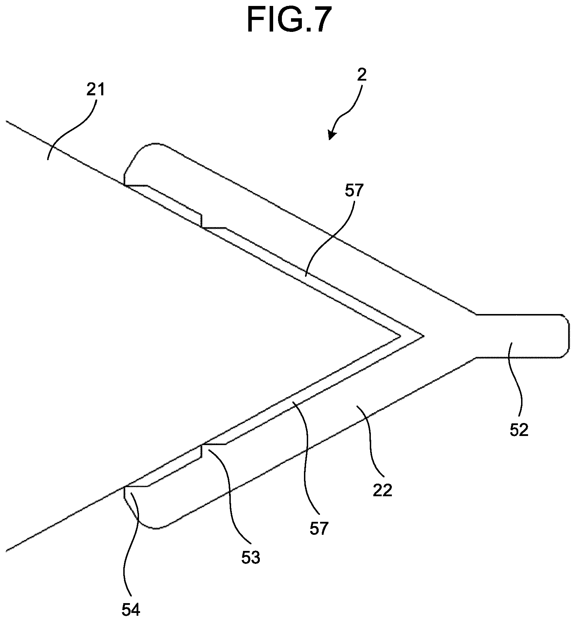

FIG. 5 is a perspective view of the heat exchanger 2 according to the first embodiment. FIG. 6 is an exploded perspective view of the heat exchanger 2 according to the first embodiment. FIG. 7 is a partially enlarged cross-sectional view of a corner portion of the heat exchanger 2 according to the first embodiment.

The heat exchanger 2 includes a heat exchange element 21, frame members 22, and end face members 23. The heat exchange element 21 is formed, for example, by alternately stacking partition members 21a, each of which is made from paper and has a sheet-like and polygonal shape, and spacing members 21b, each of which is made from paper and has a wave-like shape. In the present embodiment, the partition members 21a and the spacing members 21b have a square shape as viewed from the stacking direction of the partition members 21a, and thus, the heat exchange element 21 formed by stacking these members has a cuboid shape. The stacking direction of the partition members 21a is simply referred to as the stacking direction in the description hereinafter.

Spaces between the partition members 21a, which are spaced by the spacing members 21b, provide flow paths through which air can pass. By causing the supply airflow to pass through a flow path on one side of each of the partition members 21a and causing the discharge airflow to pass through a flow path on the other side thereof, the heat exchange element 21 can perform total heat exchange, sensible heat exchange, or latent heat exchange between the supply airflow and the discharge airflow via each of the partition members 21a. As illustrated in FIG. 4, in the side surfaces of the heat exchange element 21, a supply air inlet surface 61, in which the supply airflow flows, and a discharge air inlet surface 62, in which the discharge airflow flows, are adjacent to each other. Moreover, in the side surfaces of the heat exchange element 21, a discharge air outlet surface 64, from which the discharge airflow flows out, and the supply air inlet surface 61 are adjacent to each other. Furthermore, in the side surfaces of the heat exchange element 21, a supply air outlet surface 63, from which the supply airflow flows out, and the discharge air inlet surface 62 are adjacent to each other.

Use of paper for the partition members 21a and the spacing members 21b enables a reduction in material cost. Additionally, condensate generated when the heat exchange is performed is retained in the partition members 21a and the spacing members 21b, which are made from paper; therefore, blockage of the flow paths due to formation of ice can be reduced. The edges of the heat exchange element 21 that extend in the stacking direction are each covered by the frame member 22.

The frame members 22 cover the edges of the heat exchange element 21 that extend in the stacking direction. As illustrated in FIGS. 5 and 7, each of the frame members 22 has an L-like shape in a section and faces two of the side surfaces of the heat exchange element 21 that extend from the edges of the heat exchange element 21. The surface of each frame member 22 opposite the surface thereof that faces the heat exchange element 21 has an outer protrusion 52 formed thereon that extends in the stacking direction.

The surface of each frame member 22 that faces the heat exchange element 21 has inner protrusions 53 and 54 formed thereon that extend in the stacking direction. The inner protrusion 53 and the inner protrusion 54 are formed on the surface of each frame member 22 that faces one of the surfaces of the heat exchange element 21 and they are spaced apart from each other in a direction perpendicular to the stacking direction. Because each frame member 22 faces two of the surfaces of the heat exchange element 21, two each of the inner protrusions 53 and the inner protrusions 54 are formed on each frame member 22. The inner protrusions 53 and 54 abut on the side surfaces of the heat exchange element 21 or dig into the side surfaces of the heat exchange element 21.

As illustrated in FIG. 6, the end face members 23 cover the end surfaces of the heat exchange element 21 in the stacking direction. The end face members 23 are elastic bodies having airtightness to prevent air from leaking from the heat exchange element 21 to the end surface sides. Each of the end face members 23 is an airtight gasket having a thickness and thus air is prevented from leaking with ease even when the heat exchanger 2 has contracted.

With reference back to FIGS. 1 to 4, the bottom plate 10 includes a drain pan 11 on the inner surface side, and the drain pan 11 includes a drain port 12. The drain pan 11 includes a supply-air-side drain pan 19 to retain water resulting from condensation, due to the heat exchanger 2 or the like, of moisture contained in the air admitted through the exterior-side inlet portion 7a. The drain pan 11 also includes a discharge-air-side drain pan 20 to retain water such as condensate generated when the heat exchanger 2 performs heat exchange between air admitted through the interior-side inlet portion 8a and air admitted through the exterior-side inlet portion 7a. The discharge-air-side drain pan 20 is in communication with the drain port 12; therefore, drain water can be discharged. If the amount of water retained in the supply-air-side drain pan 19 is large, a water path may be included to achieve passage to the discharge-air-side drain pan 20.

The heat exchanger 2 is inserted into the housing 1 through an opening 1a (first opening, see also FIG. 2) generated by removing the drain pan 11. The heat exchanger 2 is placed in the housing 1 such that one edge of the heat exchanger 2 that extends in the stacking direction and the diagonally opposite edge of the heat exchanger 2 are lined up vertically. By placing the heat exchanger 2 in such a manner, the area of heat exchange of the heat exchanger 2 can be used effectively and thereby an enhancement in thermal exchange efficiency can be achieved.

The housing 1 has support recess portions 25a to 25d formed therein to support the heat exchanger 2. The support recess portions 25a to 25d are grooves that extend in the stacking direction of the partition members 21a as placed in the housing 1.

The air supplying fan 3 and the air discharging fan 4 are placed on one side of the heat exchanger 2. The positions of the air supplying fan 3 and the air discharging fan 4 are downstream of the heat exchanger 2 in their respective paths. The air supplying fan 3 and the air discharging fan 4 are placed in the housing 1 next to each other in the stacking direction of the partition members 21a such that their inlet ports 3c and 4c are oriented in opposite directions to each other and their outlet ports 3d and 4d are oriented in the same direction. This placement can reduce the housing 1 in size in the height direction.

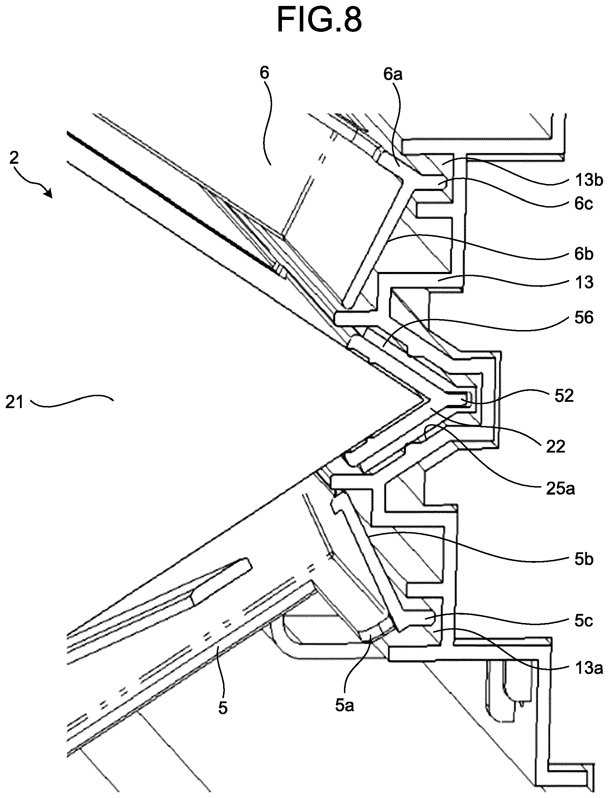

FIG. 8 is a partially enlarged cross-sectional view of a corner portion of the heat exchanger 2 accommodated in the housing 1 in the heat-exchange type ventilation apparatus 100 according to the first embodiment. In FIG. 8, the corner portion of the heat exchanger 2 on the side of the supply air filter 5 and the discharge air filter 6 in the housing 1 is enlarged.

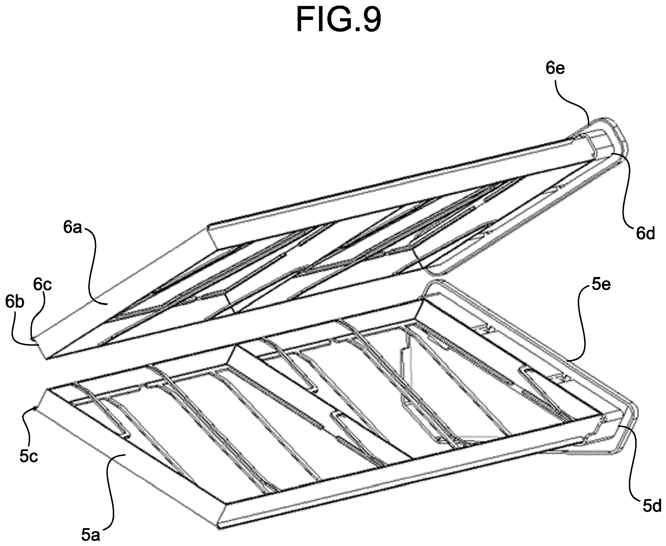

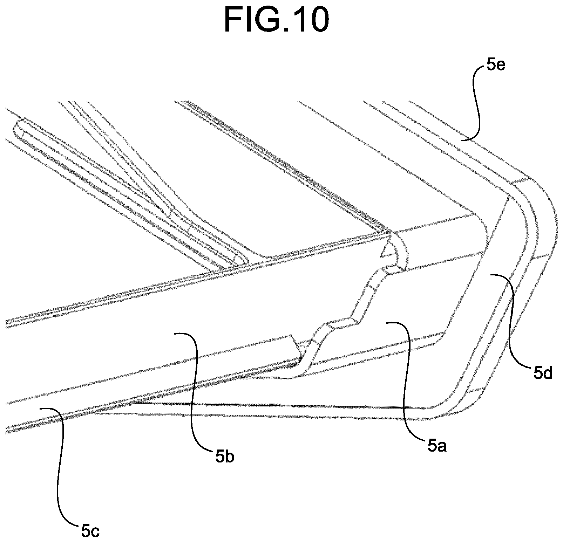

FIG. 9 is a perspective view of a supply air filter frame 5a included in the supply air filter 5 and a discharge air filter frame 6a included in the discharge air filter 6. FIG. 10 is a partially enlarged perspective view of the supply air filter frame according to the first embodiment. The supply air filter 5 and the discharge air filter 6 include the supply air filter frame 5a and the discharge air filter frame 6a, which retain the filters formed from a nonwoven fabric or the like.

The supply air filter 5 is inserted into the housing 1 through the opening 16b, which is formed in the housing 1 (see also FIG. 1), to abut on the surface of the heat exchanger 2 that is located on the upstream side in the supply air path (see also FIG. 4). The discharge air filter 6 is inserted into the housing 1 through the opening 16a, which is formed in the housing 1 (see also FIG. 1), to abut on the surface of the heat exchanger 2 that is located on the upstream side in the discharge air path (see also FIG. 4).

As illustrated in FIG. 8, a rib frame body 13 that supports the supply air filter 5 and the discharge air filter 6 is formed. A facing surface 5b of the supply air filter frame 5a that faces the rib frame body 13 has a frame protrusion 5c that extends in the stacking direction formed thereon. A facing surface 6b of the discharge air filter frame 6a that faces the rib frame body 13 has a frame protrusion 6c that extends in the stacking direction formed thereon.

The outer protrusion 52 formed on one of the frame members 22 of the heat exchanger 2 is fitted in the support recess portion 25a. The heat exchanger 2 is positioned in the housing 1 when the outer protrusion 52 is fitted in the support recess portion 25a. As illustrated in FIG. 8, a seal material 56 may be interposed between the support recess portion 25a and the outer protrusion 52.

The rib frame body 13 has filter-frame guide recess portions 13a and 13b that extend in the stacking direction formed therein such that the support recess portion 25a is located between the filter-frame guide recess portions 13a and 13b. As illustrated in FIG. 8, the frame protrusion 5c, which is formed on the supply air filter frame 5a, and the frame protrusion 6c, which is formed on the discharge air filter frame 6a, are fitted in the filter-frame guide recess portions 13a and 13b, respectively. By fitting the frame protrusions 5c and 6c in the filter-frame guide recess portions 13a and 13b and sliding the supply air filter 5 and the discharge air filter 6, insertion and removal of the supply air filter 5 and the discharge air filter 6 in the stacking direction is guided. In this way, the supply air filter 5 and the discharge air filter 6 can be inserted and removed stably. Additionally, the supply air filter 5 and the discharge air filter 6 are positioned in the housing 1 when the frame protrusions 5c and 6c are fitted in the filter-frame guide recess portions 13a and 13b.

As illustrated in FIG. 9, the supply air filter frame 5a and the discharge air filter frame 6a respectively include a supply-air-filter sealing surface portion 5d and a discharge-air-filter sealing surface portion 6d to provide sealing between the supply air filter frame 5a and the discharge air filter frame 6a and the side plate 16 of the housing 1. As illustrated in FIGS. 9 and 10, in order to further improve the airtightness, the supply-air-filter sealing surface portion 5d has a rib-like protrusion 5e and the discharge-air-filter sealing surface portion 6d has a protrusion 6e. As illustrated in FIG. 9, a supply-air filter grip 5f and a discharge-air filter grip 6f that serve as parts to be held when the filters 5 and 6 are inserted and removed are included.

The opening 16b, which is formed in the side plate 16, has an enlarged opening portion so that insects and dust to be collected in the housing 1 can be cleaned from the housing 1. As illustrated in FIG. 1, the supply-air-filter sealing surface portion 5d has such a trapezoidal shape as to fit the shape of the opening 16b.

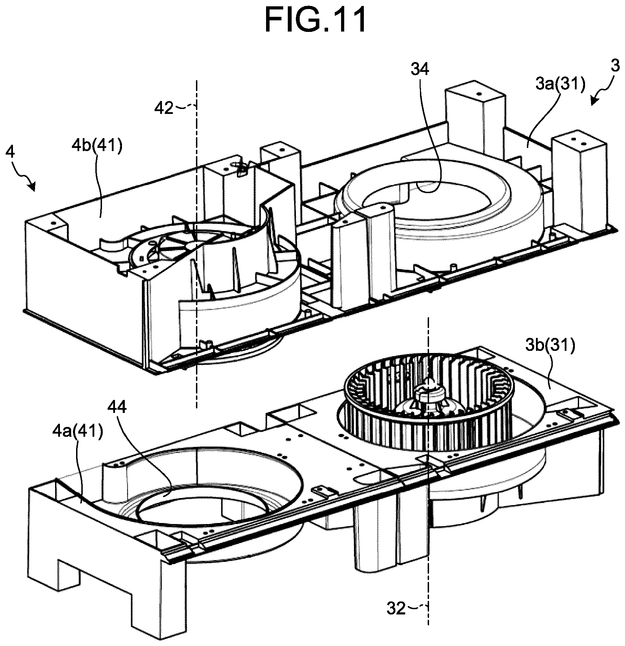

Of the support recess portions 25a to 25d, the support recess portion 25b, which is placed on the side of the air supplying fan 3 and the air discharging fan 4, is formed at the air supplying fan 3 and the air discharging fan 4. FIG. 11 is an exploded perspective view of the air supplying fan 3 and the air discharging fan 4 in the heat-exchange type ventilation apparatus 100 according to the first embodiment.

A casing 31 of the air supplying fan 3 includes an inlet-side casing 3a, which is a first casing, and a motor casing 3b, which is a second casing, and the inlet-side casing 3a and the motor casing 3b can be split from each other in a direction along a rotation axis 32 of a motor (not illustrated) at a splitting plane that is orthogonal to the rotation axis 32. The casing 31 is configured by combining the inlet-side casing 3a and the motor casing 3b. The inlet-side casing 3a includes an inlet portion 34 formed therein.

A casing 41 of the air discharging fan 4 includes an inlet-side casing 4a, which is a first casing, and a motor casing 4b, which is a second casing, and the inlet-side casing 4a and the motor casing 4b can be split from each other in a direction along a rotation axis 42 of a motor (not illustrated) at a splitting plane that is orthogonal to the rotation axis 42. The casing 41 is configured by combining the inlet-side casing 4a and the motor casing 4b. The inlet-side casing 4a includes an inlet portion 44 formed therein.

The inlet-side casing 3a of the air supplying fan 3 and the inlet-side casing 4a of the air discharging fan 4 are components having an identical shape. The motor casing 3b of the air supplying fan 3 and the motor casing 4b of the air discharging fan 4 are components having an identical shape. That is, the casing 31 of the air supplying fan 3 and the casing 41 of the air discharging fan 4 are components having an identical shape. In this manner, the number of components can be reduced and manufacturing costs can be suppressed.

The air supplying fan 3 and the air discharging fan 4 are placed next to each other such that the rotation axis 32 and the rotation axis 42 are parallel with each other and the inlet portions 34 and 44 face in opposite directions.

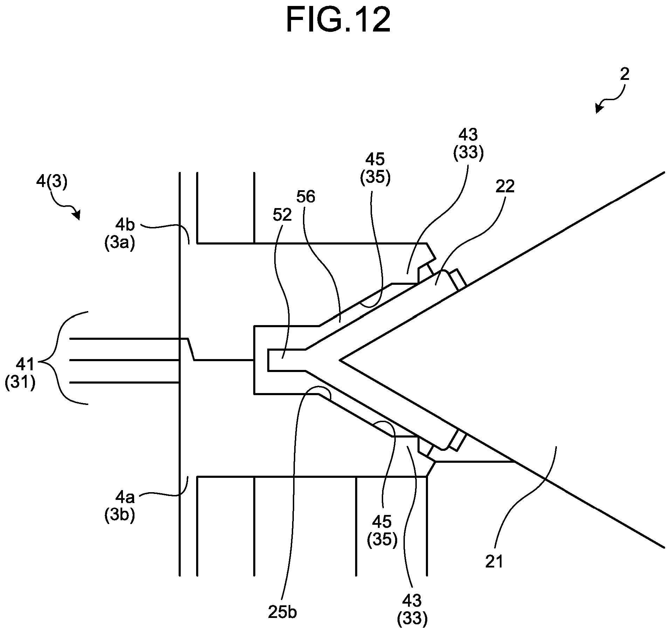

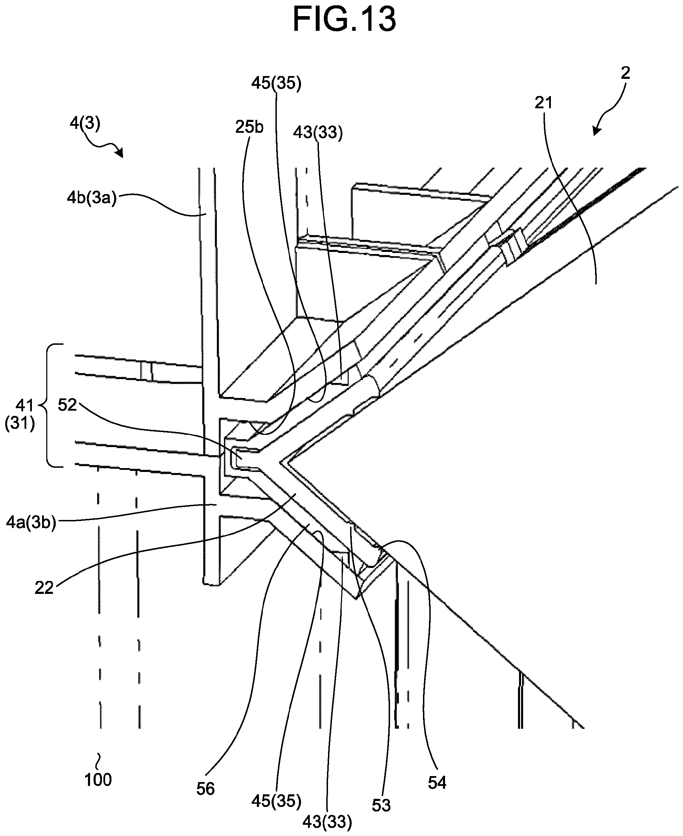

FIG. 12 is a partially enlarged cross-sectional view of a portion D illustrated in FIG. 4. FIG. 13 is a partially enlarged perspective view of the portion D illustrated in FIG. 4. The splitting plane between the inlet-side casing 4a and the motor casing 4b of the casing 41 of the air discharging fan 4 abuts on one of the edges of the heat exchanger 2 that extend in the stacking direction. The support recess portion 25b is formed at the splitting plane between the inlet-side casing 4a and the motor casing 4b. This means that the casing 41 of the air discharging fan 4 can be split into the inlet-side casing 4a and the motor casing 4b at its portion of the support recess portion 25b. The inlet-side casing 4a and the motor casing 4b have inclined surfaces 45 that face each other at the splitting plane. The support recess portion 25b is formed by the inclined surfaces 45, which face each other, by combining the inlet-side casing 4a and the motor casing 4b. The support recess portion 25b, which is formed by the inclined surfaces 45, is a V-shaped groove forming an angle less than 180°. The inclined surfaces 45, which form inner wall surfaces of the support recess portion 25b, have protrusions 43 extending in the stacking direction.

As is the case with the casing 41 of the air discharging fan 4, the splitting plane between the inlet-side casing 3a and the motor casing 3b of the casing 31 of the air supplying fan 3 abuts on one of the edges of the heat exchanger 2 that extend in the stacking direction. The support recess portion 25b is formed at the splitting plane between the inlet-side casing 3a and the motor casing 3b. The inlet-side casing 3a and the motor casing 3b have inclined surfaces 35 that face each other at the splitting plane. The support recess portion 25b is formed by the inclined surfaces 35, which face each other, by combining the inlet-side casing 3a and the motor casing 3b. The support recess portion 25b, which is formed by the inclined surfaces 35, is a V-shaped groove forming an angle less than 180°. The inclined surfaces 35, which form inner wall surfaces of the support recess portion 25b, have protrusions 33 extending in the stacking direction.

One of the frame members 22 and the corresponding one of the outer protrusions 52 of the heat exchanger 2 are fitted in the support recess portion 25b. The seal material 56 is interposed between the support recess portion 25b and the frame member 22. If a partition wall is placed between the air supplying fan 3 and the air discharging fan 4, and the heat exchanger 2, the support recess portion 25b may be formed in the partition wall.

The support recess portion 25d is formed on the bottom plate 10 side of the heat exchanger 2 in the housing 1, for example, in the drain pan 11, although detailed illustration is omitted. As in the case with the support recess portions 25a and 25b described above, the outer protrusions 52 of the frame members 22 are fitted in the support recess portions 25c and 25d. Additionally, the seal material 56 may be interposed between the support recess portion 25c and the corresponding one of the outer protrusions 52 and between the support recess portion 25d and the corresponding one of the outer protrusions 52. The inner wall surfaces of the support recess portions 25c and 25d may have protrusions extending in the stacking direction.

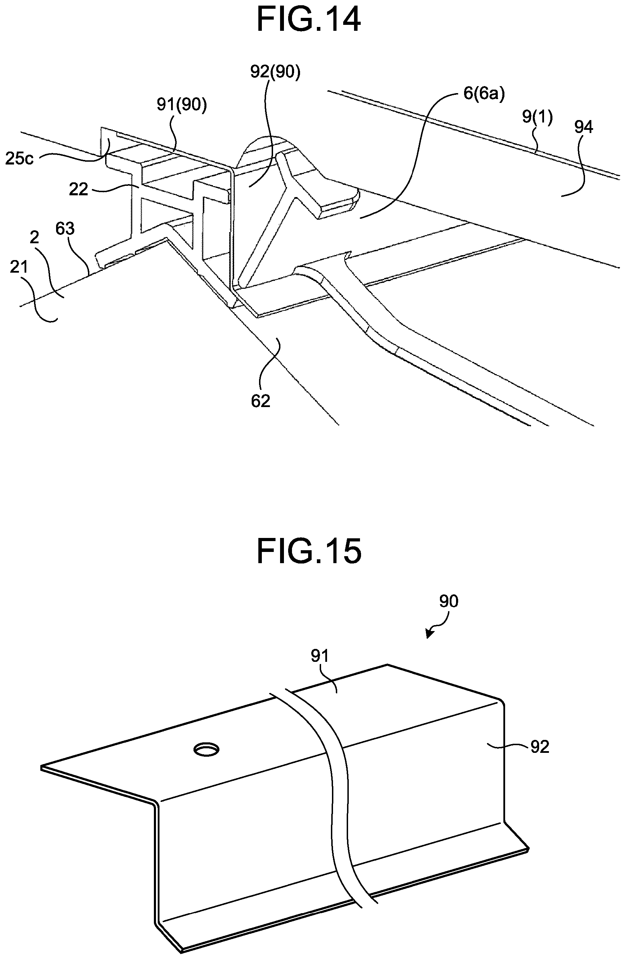

Next, the support recess portion 25c, which positions the heat exchanger 2 on the top plate 9 side of the housing 1 is described in more detail. FIG. 14 is a partially enlarged perspective view of a portion A illustrated in FIG. 4. As illustrated in FIG. 14, a positioning member 90 forms part of the support recess portion 25c.

FIG. 15 is a perspective view of the positioning member 90 according to the first embodiment. The positioning member 90 abuts on the corner portion of the heat exchanger 2 between the discharge air inlet surface 62 and the supply air outlet surface 63 so as to position the heat exchanger 2. The positioning member 90 includes a fixed plate portion 91 fixed inside the housing 1 and a standing plate portion 92, which is provided to stand from the fixed plate portion 91.

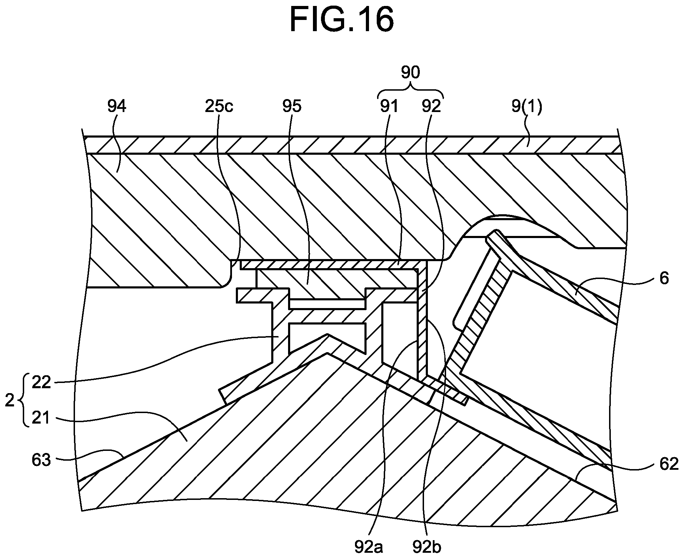

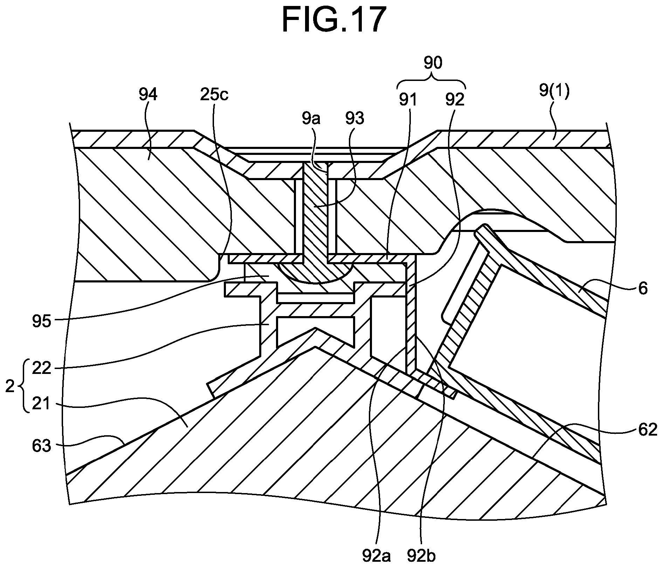

FIG. 16 is a partially enlarged cross-sectional view of the portion A illustrated in FIG. 4. FIG. 17 is a partially enlarged cross-sectional view of a portion in which the positioning member 90 is fixed with a screw 93 and which corresponds to the portion A illustrated in FIG. 4. As illustrated in FIG. 17, the fixed plate portion 91 of the positioning member 90 is fixed to the housing 1 by screwing the screw 93 that is inserted from the inside of the housing 1 into a screw hole 9a formed in the top plate 9 of the housing 1 with a heat insulating material 94 interposed between the fixed plate portion 91 and the top plate 9.

While the fixed plate portion 91 is fixed to the top plate 9, the standing plate portion 92 is arranged such that the standing plate portion 92 protrudes inward of the housing 1. The end portion of the standing plate portion 92, which is opposite the fixed plate portion 91, is bent to be parallel to the discharge air inlet surface 62 of the heat exchanger 2.

The corner portion of the heat exchanger 2 between the discharge air inlet surface 62 and the supply air outlet surface 63 abuts on one surface 92a side of the standing plate portion 92, whereby the heat exchanger 2 is positioned. Here, a "corner portion" of the heat exchanger 2 means a portion including both a corner portion of the heat exchanger 2 and the frame member 22 provided at the corner portion of the heat exchange element 21. That is, the corner portion of the heat exchanger 2 between the discharge air inlet surface 62 and the supply air outlet surface 63 includes the frame member 22 that abuts on the standing plate portion 92 in FIGS. 16 and 17. The discharge air filter 6 abuts on the other surface 92b side of the standing plate portion 92 and is positioned. Although the present embodiment describes an example in which one of the corner portions of the heat exchanger 2, which is between the discharge air inlet surface 62 and the supply air outlet surface 63, is positioned by the support recess portion 25c, the corner portion between the supply air inlet surface 61 and the discharge air outlet surface 64 may be configured to be positioned by the support recess portion 25c. In other words, as long as the inlet surface in which the supply airflow or the discharge airflow flows is provided on one side of a corner portion to be positioned by the support recess portion 25c and the outlet surface from which the supply airflow or the discharge airflow flows out is provided on the other side of that corner portion, it is generally unnecessary to provide a filter that covers the outlet surface. Consequently, it is sufficient if the support recess portion 25c supports and positions a filter that covers the inlet surface and the heat exchanger 2. Accordingly, it is possible to employ the configuration exemplified in FIGS. 14 to 17.

As illustrated in FIG. 17, a heat insulating material 95, which is a heat insulating portion, is provided between the frame member 22 and the fixed plate portion 91. The heat insulating material 95 may be attached to the fixed plate portion 91 such that the heat insulating material 95 covers the head of the screw 93 with which the positioning member 90 has been fixed, or may be attached to a portion of the frame member 22 opposed to the fixed plate portion 91.

In the heat-exchange type ventilation apparatus 100 described above, the inner protrusions 53 and 54, which are formed on the frame members 22, are in line contact with the heat exchange element 21; thus, this is less likely to form a gap than a case in which the frame members 22 are in surface contact with the heat exchange element 21, and thereby airtightness can be improved. Additionally, as illustrated in FIG. 7, by interposing a seal material 57 in a gap between each of the frame members 22 and the heat exchange element 21, airtightness can be further improved.

Furthermore, the inner protrusions 53 and 54 can be used as marks indicative of an application area over which the seal material 57 is applied. Additionally, the inner protrusions 53 and 54 can be used as walls to prevent the seal material 57 from leaking from the gap between each of the frame members 22 and the heat exchange element 21. In particular, the inner protrusions 54, which are placed on the end portion sides of the inner protrusions 53 on each of the frame members 22, tend to function as walls to prevent the seal material 57 from leaking. By forming the inner protrusions 54 as end-portion-side protrusions on the end portions of each of the frame members 22, the inner protrusions 54 can function as walls to prevent the leaking more reliably. The number of inner protrusions formed on the surface of each frame member 22 that faces one of the surfaces of the heat exchange element 21 may be one, or may be three or more.

Additionally, the fitting structure in which the outer protrusions 52 of the frame members 22 are fitted in the support recess portions 25a to 25d can achieve an improvement in airtightness between the heat exchanger 2 and the housing 1. Furthermore, even when the heat exchanger 2 has contracted due to deterioration over time, the airtightness between the heat exchanger 2 and the housing 1 is maintained as long as the outer protrusions 52 are fitted in the support recess portions 25a to 25d. That is, even when the heat exchanger 2 has contracted, the airtightness is maintained with ease. Moreover, even when the dimensions of the heat exchanger 2 vary due to manufacturing errors, the airtightness between the heat exchanger 2 and the housing 1 is maintained as long as the degree of variation is such that the outer protrusions 52 are allowed to be fitted in the support recess portions 25a to 25d. Moreover, by interposing the seal material 56 between the outer protrusions 52 and the support recess portions 25a to 25d, the airtightness is maintained further reliably when the heat exchanger 2 has contracted. Furthermore, when the outer protrusions 52 are fitted in the support recess portions 25a to 25d in greater depths, the airtightness can be maintained even when the heat exchanger 2 has a greater contraction.

Furthermore, as long as the outer protrusions 52 are fitted in the support recess portions 25a to 25d, shifting in position of the heat exchanger 2 and falling of the heat exchanger 2 in the housing 1 can be prevented even when the heat exchanger 2 has contracted. Additionally, the frame members 22 reinforce the heat exchanger 2; thus, the product life can be extended.

Additionally, the frame protrusion 5c, which is formed on the supply air filter frame 5a, and the frame protrusion 6c, which is formed on the discharge air filter frame 6a, are fitted in the filter-frame guide recess portions 13a and 13b; thus, such a fitting structure can achieve an improvement in airtightness between the supply air filter frame 5a and the discharge air filter frame 6a, and the housing 1. In this way, air can be prevented from passing through the supply air path and the discharge air path without going through the supply air filter 5 and the discharge air filter 6.

Further, because the heat exchanger 2 and the discharge air filter 6 are fixed by the positioning member 90, it is possible to reduce the number of components and suppress the manufacturing cost compared with a case where a member for positioning the heat exchanger 2 and a member for positioning the discharge air filter 6 are provided separately.

In addition, because the heat exchange element 21 has a configuration in which a plurality of partition plates are stacked, in general, a dimensional error and a dimensional change over time are likely to occur compared with the housing made of metal. In the present embodiment, the discharge air filter 6 is positioned by the positioning member 90 fixed to the housing 1; therefore, it is possible to improve the positioning accuracy of the discharge air filter 6 in the housing 1 compared with a case where the heat exchanger 2 is caused to support and position the discharge air filter 6.

Furthermore, as illustrated in FIG. 17, the heat insulating material 95 covers the head of the screw 93, with which the positioning member 90 is fixed to the top plate 9 of the housing 1. Therefore, it is possible to prevent the screw 93 from being cooled by the air passing through the supply air path and thus to prevent the occurrence of condensation on the shaft portion of the screw 93 that is exposed from the outer portion of the housing 1.

### Reference Signs List

1 housing, 2 heat exchanger, 3 air supplying fan, 4 air discharging fan, 5 supply air filter, 6 discharge air filter, 7a exterior-side inlet portion, 7b interior-side outlet portion, 8a interior-side inlet portion, 8b exterior-side outlet portion, 9 top plate, 10 bottom plate, 11 drain pan, 13 rib frame body, 19 supply-air-side drain pan, 20 discharge-air-side drain pan, 21 heat exchange element, 21a partition member, 21b spacing member, 22 frame member, 23 end face member, 25a to 25d support recess portion, 52 outer protrusion, 53, 54 inner protrusion, 56, 57 seal material, 61 supply air inlet surface, 62 discharge air inlet surface, 63 supply air outlet surface, 64 discharge air outlet surface, 90 positioning member, 91 fixed plate portion, 92 standing plate portion, 93 screw, 94 heat insulating material, 95 heat insulating material, 100 heat-exchange type ventilation apparatus.

## Claims

1. A heat-exchange type ventilation apparatus (100), comprising:
a main body (1) in which a supply air path and a discharge air path are formed, the supply air path comprising an exterior inlet portion (7a) to admit outside air and an interior outlet portion (7b) to discharge the outside air, the discharge air path comprising an interior inlet portion (8a) to admit inside air and an exterior outlet portion (8b) to discharge the inside air;
an air supplying fan (3) placed in the supply air path;
an air discharging fan (4) placed in the discharge air path;
a heat exchanger (2) to allow heat exchange between a supply airflow passing through the supply air path and a discharge airflow passing through the discharge air path, the heat exchanger (2) including a plurality of sheet-like partition members (21a) stacked with spacing therebetween so as to have a polygonal prismatic shape, the heat exchanger (2) having an inlet surface (62) in which the supply airflow or the discharge airflow flows and an outlet surface (63) from which the supply airflow or the discharge airflow flows out formed on a side surface thereof;
a filter (6) covering the inlet surface (62); and
a positioning member (90) to position the heat exchanger (2) and the filter (6), the positioning member (90) being fixed to the main body (1) inside the main body (1); **characterized in that**:
the positioning member (90) includes
a fixed plate portion (91) fixed to the main body (1) inside the main body (1), and
a standing plate portion (92) provided to stand from the fixed plate portion (91),
an end portion of the standing plate portion (92), opposite the fixed plate portion (91), is bent,
a corner portion of the heat exchanger (2) between the inlet surface (62) and the outlet surface (63) abuts on one surface (92a) side of the bent portion of the standing plate portion (92), and
the filter (6) abuts on another surface (92b) side of the bent portion of the standing plate portion (92) so as to be positioned.

2. The heat-exchange type ventilation apparatus (100) according to claim 1, further comprising:
a screw (93) with which the fixed plate portion (91) is fixed to the main body (1); and
a heat insulating portion (95) provided between the corner portion abutting on the standing plate portion (92) and the fixed plate portion (91) and covering a head of the screw (93).

3. The heat-exchange type ventilation apparatus (100) according to claim 2, wherein the heat insulating portion (95) is attached to the fixed plate portion (91).

4. The heat-exchange type ventilation apparatus (100) according to claim 1, wherein the main body (1) has a first opening (1a) and a second opening (16a, 16b) formed therein, the first opening (1a) allowing the heat exchanger (2) to be inserted into the main body (1) in a direction perpendicular to a stacking direction of the partition members (21a), the second opening (16a, 16b) allowing the filter (5, 6) to be inserted into the main body (1) in a direction parallel to the stacking direction of the partition members (21a).

## Patentansprüche

1. Wärmetauscher-Lüftungsvorrichtung (100), die Folgendes umfasst:
einen Hauptkörper (1), in dem ein Luftzufuhrpfad und ein Luftabgabepfad ausgebildet sind, wobei der Luftzufuhrpfad einen äußeren Einlassabschnitt (7a), um Außenluft einzulassen, und einen inneren Auslassabschnitt (7b) umfasst, um die Außenluft abzugeben, wobei der Luftabgabepfad einen inneren Einlassabschnitt (8a), um Innenluft einzulassen, und einen äußeren Auslassabschnitt (8b) umfasst, um die Innenluft abzugeben;
ein Luftzufuhrgebläse (3), das in dem Luftzufuhrpfad platziert ist;
ein Luftabgabegebläse (4), das in dem Luftabgabepfad platziert ist;
einen Wärmetauscher (2), um einen Wärmeaustausch zwischen einem Zufuhrluftstrom, der durch den Luftzufuhrpfad strömt, und einem Abgabeluftstrom, der durch den Luftabgabepfad strömt, zu ermöglichen, wobei der Wärmetauscher (2) eine Vielzahl von plattenförmigen Trennelementen (21a) aufweist, die derart mit einem Abstand zwischen diesen gestapelt sind, dass sie die Form eines polygonalen Prismas aufweisen, wobei der Wärmetauscher (2) eine auf einer Seitenfläche von diesem ausgebildete Einlassfläche (62), in die der Zufuhrluftstrom oder der Abgabeluftstrom strömt, und eine Auslassfläche (63) aufweist, von der der Zufuhrluftstrom oder der Abgabeluftstrom nach außen strömt;
einen Filter (6), der die Einlassfläche (62) bedeckt; und
ein Positionierungselement (90), um den Wärmetauscher (2) und den Filter (6) zu positionieren, wobei das Positionierungselement (90) im Inneren des Hauptkörpers (1) an dem Hauptkörper (1) befestigt ist; **dadurch gekennzeichnet, dass**:
das Positionierungselement (90) Folgendes umfasst:
einen fixierten Plattenabschnitt (91), der im Inneren des Hauptkörpers (1) an dem Hauptkörper (1) fixiert ist, und
einen stehenden Plattenabschnitt (92), der von dem fixierten Plattenabschnitt (91) stehend bereitgestellt ist,
wobei ein Endabschnitt des stehenden Plattenabschnitts (92), der dem fixierten Plattenabschnitt (91) entgegengesetzt ist, gebogen ist,
ein Eckabschnitt des Wärmetauschers (2) zwischen der Einlassfläche (62) und der Auslassfläche (63) mit einer Flächen (92a)-Seite des gebogenen Abschnitts des stehenden Plattenabschnitts (92) in Anlage steht, und
der Filter (6) mit einer weiteren Flächen (92b)-Seite des gebogenen Abschnitts des stehenden Plattenabschnitts (92) in Anlage steht, um positioniert zu werden.

2. Wärmetauscher-Lüftungsvorrichtung (100) nach Anspruch 1, die ferner Folgendes umfasst:
eine Schraube (93), mit der der fixierte Plattenabschnitt (91) an dem Hauptkörper (1) fixiert ist; und
einen Wärmeisolationsabschnitt (95), der zwischen dem Eckabschnitt, der mit dem stehenden Plattenabschnitt (92) in Anlage steht, und dem fixierten Plattenabschnitt (91) bereitgestellt ist und den Kopf der Schraube (93) bedeckt.

3. Wärmetauscher-Lüftungsvorrichtung (100) nach Anspruch 2, wobei der Wärmeisolationsabschnitt (95) an dem fixierten Plattenabschnitt (91) befestigt ist.

4. Wärmetauscher-Lüftungsvorrichtung (100) nach Anspruch 1, wobei der Hauptkörper (1) eine darin ausgebildete erste Öffnung (1a) und zweite Öffnung (16a, 16b) aufweist, wobei die erste Öffnung (1a) ermöglicht, dass der Wärmetauscher (2) in den Hauptkörper (1) in einer Richtung eingesetzt wird, die normal auf eine Stapelrichtung der Trennelemente (21a) ist, wobei die zweite Öffnung (16a, 16b) ermöglicht, dass der Filter (5, 6) in den Hauptkörper (1) in einer Richtung eingesetzt wird, die parallel zu der Stapelrichtung der Trennelemente (21a) ist.

## Revendications

1. Appareil de ventilation du type à échange de chaleur (100), comprenant :
un corps principal (1) dans lequel sont formés un trajet d'air d'alimentation et un trajet d'air d'évacuation, le trajet d'air d'alimentation comprenant une partie d'entrée extérieure (7a) pour admettre l'air extérieur et une partie de sortie intérieure (7b) pour évacuer l'air extérieur, le trajet d'air d'évacuation comprenant une partie d'entrée intérieure (8a) pour admettre de l'air intérieur et une partie de sortie extérieure (8b) pour évacuer l'air intérieur ;
une soufflante d'alimentation en air (3) placée dans le trajet d'air d'alimentation ;
une soufflante d'évacuation d'air (4) placée dans le trajet d'air d'évacuation ;
un échangeur de chaleur (2) pour permettre un échange de chaleur entre un flux d'air d'alimentation passant par le trajet d'air d'alimentation et un flux d'air d'évacuation passant par le trajet d'air d'évacuation, l'échangeur de chaleur (2) comprenant une pluralité d'éléments de séparation en forme de feuille (21a) empilés avec un espacement entre eux pour avoir une forme prismatique polygonale, l'échangeur de chaleur (2) ayant une surface d'entrée (62) dans laquelle s'écoule le flux d'air d'alimentation ou le flux d'air d'évacuation et une surface de sortie (63), à partir de laquelle le flux d'air d'alimentation ou le flux d'air d'évacuation s'écoule, formée sur une surface latérale de celui-ci ;
un filtre (6) recouvrant la surface d'entrée (62) ; et
un élément de positionnement (90) pour positionner l'échangeur de chaleur (2) et le filtre (6), l'élément de positionnement (90) étant fixé au corps principal (1) à l'intérieur du corps principal (1) ; **caractérisé en ce que** :
l'élément de positionnement (90) comprend
une partie de plaque fixe (91) fixée au corps principal (1) à l'intérieur du corps principal (1), et
une partie de plaque dressée (92) prévue pour être dressée à partir de la partie de plaque fixe (91),
une partie d'extrémité de la partie de plaque dressée (92), opposée à la partie de plaque fixe (91), est pliée,
une partie de coin de l'échangeur de chaleur (2) entre la surface d'entrée (62) et la surface de sortie (63) vient en butée sur un premier côté de surface (92a) de la partie pliée de la partie de plaque dressée (92), et
le filtre (6) vient en appui sur un autre côté de surface (92b) de la partie pliée de la partie de plaque dressée (92) de manière à être positionné.

2. Appareil de ventilation (100) du type à échange de chaleur selon la revendication 1, comprenant en outre :
une vis (93) avec laquelle la partie de plaque fixe (91) est fixée au corps principal (1) ; et
une partie d'isolation thermique (95) prévue entre la partie de coin venant en butée sur la partie de plaque dressée (92) et la partie de plaque fixe (91) et recouvrant une tête de la vis (93).

3. Appareil de ventilation du type à échange de chaleur (100) selon la revendication 2, dans lequel la partie d'isolation thermique (95) est fixée à la partie de plaque fixe (91).

4. Appareil de ventilation de type à échange de chaleur (100) selon la revendication 1, dans lequel le corps principal (1) présente une première ouverture (la) et une seconde ouverture (16a, 16b) formées en son sein, la première ouverture (la) permettant à l'échangeur de chaleur (2) d'être insérée dans le corps principal (1) dans une direction perpendiculaire à une direction d'empilement des éléments de séparation (21a), la seconde ouverture (16a, 16b) permettant au filtre (5, 6) d'être inséré dans le corps principal (1) dans une direction parallèle à la direction d'empilement des éléments de séparation (21a).
